# EUROPEAN PATENT APPLICATION

(11) **EP 4 693 910 A2**
(43) Date of publication of application: **11.02.2026**
(21) Application number: 24785328.6
(22) Date of filing: 05.04.2024
(51) Int. Cl.: H04B 1/401, G01S 19/17, H01Q 1/24, H04W 4/90, H04W 84/06, G01S 19/13, G01S 19/42, H04B 7/02

(54) **ELECTRONIC DEVICE THAT RECEIVES GNSS-BASED LOCATION INFORMATION WHILE RECEIVING SIGNALS FROM SATELLITE, AND OPERATION METHOD THEREOF**

(30) Priority: 07.04.2023 KR 20230045832; 17.07.2023 KR 20230092452
(71) Applicant: Samsung Electronics Co., Ltd., Suwon-si, Gyeonggi-do 16677 (KR)
(72) Inventor: SEO, Hyunmin, Suwon-si Gyeonggi-do 16677 (KR); JEON, Minhwan, Suwon-si Gyeonggi-do 16677 (KR); KIM, Seunghwan, Suwon-si Gyeonggi-do 16677 (KR); KIM, Cheonshik, Suwon-si Gyeonggi-do 16677 (KR); LEE, Dongsub, Suwon-si Gyeonggi-do 16677 (KR)
(74) Representative: Gulde & Partner
(86) International application number: PCT/KR2024/004541
(87) International publication number: WO 2024/210631

(57) **Abstract**

An electronic device, according to one embodiment, may comprise: a first antenna; a second antenna; a GNSS module; a first satellite module; a second satellite module connected to the second antenna; a switch configured to connect either the first satellite module or the GNSS module to the first antenna; and at least one processor. The at least one processor, according to one embodiment, may be configured to transmit and receive signals to and from a first satellite by using the first satellite module connected to the first antenna via the switch, in a first state of the first satellite module associated with an emergency service. According to one embodiment, signals may be received from the first satellite by using the second satellite module connected to the second antenna. The at least one processor, according to one embodiment, may be configured to monitor signals transmitted from the first satellite by using the first satellite module connected to the first antenna via the switch, in a second state or third state of the first satellite module, which is associated with the emergency service and is different from the first state. When, in the second state or third state, the first antenna is connected to the GNSS module via the switch, the at least one processor, according to one embodiment, may be configured to receive information on the location of the electronic device from the second satellite by using the GNSS module connected to the first antenna, while monitoring signals transmitted from the first satellite by using the second satellite module connected to the second antenna.

## Description

### [Technical Field]

An embodiment of the disclosure relates to an electronic device for receiving GNSS-based location information, while receiving a signal from a satellite, and a method of operating the same.

### [Background Art]

Recently, electronic devices supporting non-terrestrial network communication (e.g., satellite communication) have been actively introduced. For example, an electronic device may perform communication with a satellite of an existing satellite communication provider by using the frequency and communication method of the provider. For example, the electronic device may perform communication with the satellite using a cellular long term evolution (LTE) frequency based on the LTE standard (or 5G standard). For example, the electronic device may perform communication with the satellite based on the 5G non-terrestrial networks (NTN) standard.

For example, when the electronic device performs communication with a non-terrestrial network based on the LTE standard, some of the frequencies defined in the LTE standard may be allocated for non-terrestrial communication. The electronic device may perform satellite communication using a protocol stack used for terrestrial communication, and an additional protocol stack for non-terrestrial communication may not be required.

### [Detailed Description of the Invention]

### [Technical Solution]

According to an embodiment, an electronic device may include a first antenna, a second antenna, a GNSS module, a first satellite module, a second satellite module connected to the second antenna, a switch configured to connect any one of the first satellite module and the GNSS module to the first antenna, and at least one processor. According to an embodiment, the at least one processor may be configured to, in a first state of the first satellite module related to an emergency service, transmit and receive a signal to and from a first satellite using the first satellite module connected to the first antenna via the switch. According to an embodiment, a signal may be received from the first satellite using the second satellite module connected to the second antenna. According to an embodiment, the at least one processor may be configured to, in a second state or a third state of the first satellite module related to the emergency service, different from the first state, monitor a signal transmitted from the first satellite using the first satellite module connected to the first antenna via the switch. According to an embodiment, the at least one processor may be configured to, when the GNSS module and the first antenna are connected via the switch in the second state or the third state, monitor a signal transmitted from the first satellite using the second satellite module connected to the second antenna, while receiving location information about the electronic device from a second satellite using the GNSS module connected to the first antenna.

According to an embodiment, a method of operating an electronic device may include, in a first state of a first satellite module included in the electronic device, related to an emergency service, transmitting and receiving a signal to and from a first satellite using the first satellite module connected to a first antenna included in the electronic device via a switch included in the electronic device. According to an embodiment, a signal may be received from the first satellite using a second satellite module connected to a second antenna. According to an embodiment, the method may include, in a second state or a third state of the first satellite module related to the emergency service, different from the first state, monitoring a signal transmitted from the first satellite using the first satellite module connected to the first antenna via the switch. According to an embodiment, the method may include, when a GNSS module included in the electronic device and the first antenna are connected via the switch in the second state or the third state, monitoring a signal transmitted from the first satellite using the second satellite module included in the electronic device connected to the second antenna included in the electronic device, while receiving location information about the electronic device from a second satellite using the GNSS module connected to the first antenna.

According to an embodiment, a non-transitory recording medium may store instructions that may perform, in a first state of a first satellite module included in an electronic device, related to an emergency service, transmitting and receiving a signal to and from a first satellite using the first satellite module connected to a first antenna included in the electronic device via a switch included in the electronic device, in a second state or a third state of the first satellite module related to the emergency service, different from the first state, monitoring a signal transmitted from the first satellite using the first satellite module connected to the first antenna via the switch, and when a GNSS module included in the electronic device and the first antenna are connected via the switch in the second state or the third state, monitoring a signal transmitted from the first satellite using the second satellite module included in the electronic device connected to the second antenna included in the electronic device, while receiving location information about the electronic device from a second satellite using the GNSS module connected to the first antenna.

### [Brief Description of Drawings]

FIG. 1 is a block diagram illustrating an electronic device in a network environment according to an embodiment.
FIG. 2 is a diagram illustrating an electronic device and a remote communication network environment according to an embodiment.
FIG. 3 is a diagram illustrating connection of an electronic device according to an embodiment.
FIG. 4 is a diagram illustrating a non-terrestrial network system 400 according to an embodiment.
FIG. 5A is a diagram illustrating an operation of monitoring a signal transmitted from a first satellite and receiving location information from a second satellite by an electronic device according to a comparative embodiment.
FIG. 5B is a diagram illustrating an operation of monitoring a signal transmitted from a first satellite by an electronic device, while receiving location information from a second satellite according to an embodiment.
FIG. 6 is a block diagram illustrating an electronic device according to an embodiment.
FIG. 7 is a block diagram illustrating an electronic device for supporting non-terrestrial network communication according to an embodiment.
FIG. 8 is a flowchart illustrating an operation of monitoring a signal transmitted from a first satellite by an electronic device, while receiving location information from a second satellite according to an embodiment.
FIG. 9 is a flowchart illustrating an operation of identifying a time period for receiving location information from a second satellite by an electronic device according to an embodiment.
FIG. 10 is a flowchart illustrating an operation of updating location information and transmitting a signal to a first satellite by an electronic device according to an embodiment.
FIG. 11A is a timing diagram illustrating an operation of receiving location information from a second satellite by an electronic device according to a comparative embodiment.
FIG. 11B is a timing diagram illustrating an operation of monitoring a signal transmitted from a first satellite by an electronic device, while receiving location information from a second satellite according to an embodiment.

### [Mode for Carrying out the Invention]

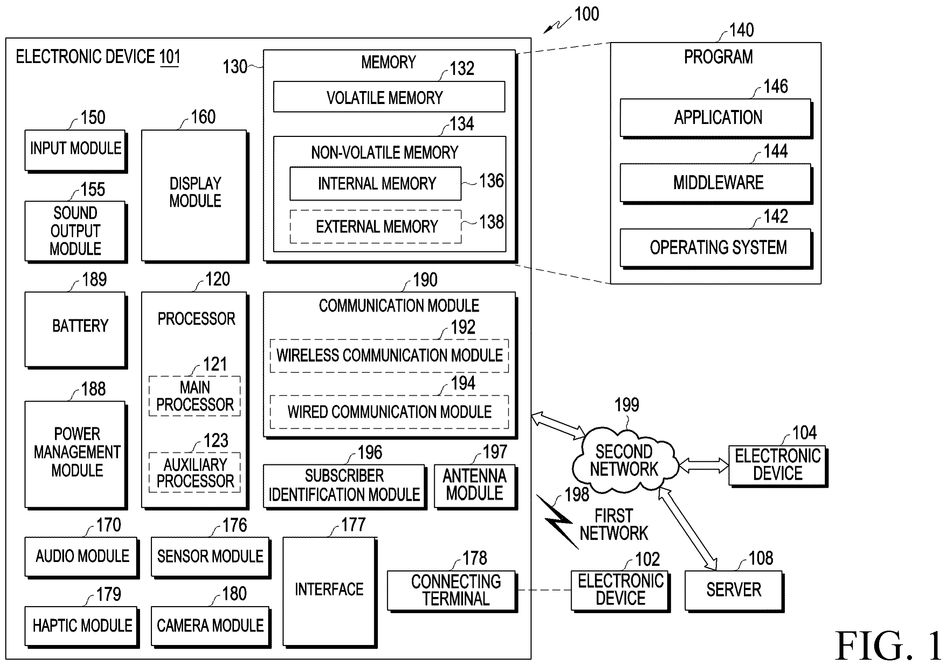

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

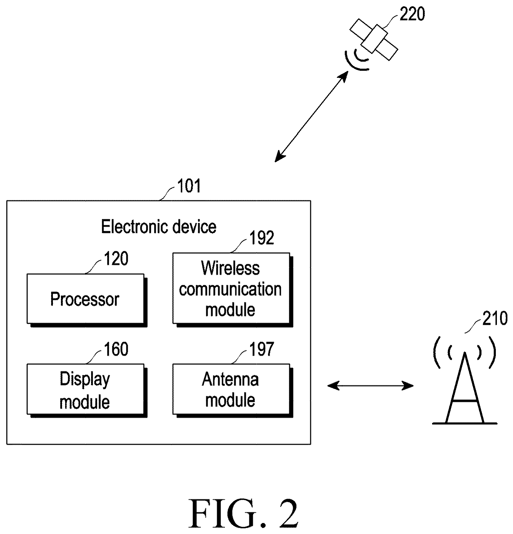

FIG. 2 is a diagram illustrating an electronic device and a remote communication network environment according to an embodiment.

The electronic device 101 may transmit and/or receive data via a terrestrial network and/or a non-terrestrial network. The electronic device 101 may be identical to or include the configuration of the electronic device illustrated in FIG. 1.

The terrestrial network may refer to a network capable of providing data communication via a terrestrial wireless communication device 210. For example, the terrestrial wireless communication device 210 may include a base station (BS) located on the ground (e.g., fixed on the ground). The terrestrial wireless communication device 210 may support at least one of various communication schemes supportable by the electronic device 101. For example, the terrestrial wireless communication device 210 may include an eNodeB or gNodeB, but its type is not limited.

The non-terrestrial network may refer to a network capable of providing data communication via at least one non-terrestrial wireless communication device 220. For example, the non-terrestrial wireless communication device 220 may include at least one of various communication devices such as a BS or repeater which is not located on the ground. For example, the non-terrestrial wireless communication device 220 may include a satellite and/or an unmanned aerial vehicle, but its type is not limited. For example, the satellite may include a low-earth orbit (LEO) satellite, a medium-earth orbit (MEO) satellite, a geostationary earth orbit (GEO) satellite, and/or a high elliptical orbit (HEO) satellite. For example, the satellite may include a mobile satellite and/or a geostationary satellite.

The non-terrestrial wireless communication device 220 may support at least one of various wireless communication schemes. For example, the non-terrestrial wireless communication device 220 may support an NR non-terrestrial network (NTN) defined by the 3^{rd} generation partnership project (3GPP). Alternatively, the non-terrestrial wireless communication device 220 may support at least one communication scheme based on various communication standards such as LTE, global system for mobile communications (GSM), and code division multiple access (CDMA), but its type is not limited.

The terrestrial network and the non-terrestrial network may be independent networks. Alternatively, the terrestrial network and the non-terrestrial network may be included in at least one related network (e.g., a network provided by the same operator).

When communication with the terrestrial network is impossible or not smooth, the electronic device 101 may perform wireless communication via the non-terrestrial network. Alternatively, the electronic device 101 may perform wireless communication via the non-terrestrial network regardless of a communication status with the terrestrial network, under the circumstances.

According to an embodiment, the electronic device 101 may include the processor 120, the display module 160 (e.g., a display), the wireless communication module 192 (e.g., a communication circuit), and/or the antenna module 197. For example, the processor 120 may be operatively, functionally, and/or electrically connected to the display module 160, the wireless communication module 192, and/or the antenna module 197.

The processor 120 may control at least one other component (e.g., hardware or software component) of the electronic device 101 connected to the processor 120 by executing instructions (e.g., the program 140 of FIG. 1) stored at least temporarily in memory (e.g., the memory 130 of FIG. 1), and may perform various data processing or operations. According to an embodiment, the processor 120 may control overall operations related to terrestrial network communication and/or non-terrestrial network communication. For example, the processor 120 may include a communication processor (e.g., the auxiliary processor 123 of FIG. 1) related to terrestrial network communication and/or non-terrestrial network communication.

The display module 160 may visually provide information to the outside (e.g., a user) of the electronic device 101.

According to an embodiment, the display module 160 may display a user interface (UI) indicating information related to the terrestrial network and/or the non-terrestrial network. For example, the UI indicating the information related to the terrestrial network and/or the non-terrestrial network may include at least one of UIs indicating information related to a network type (e.g., cellular communication (3G, 4G, and 5G), short-range communication (e.g., BT and WIFI), and satellite communication), a network service provider type (e.g., a satellite communication service provider (e.g., Iridium)), an emergency service provider (ESP), a network signal strength (e.g., signal strength bars, RSSI, and RSRP), the direction (e.g., orientation) of a communication device (satellite) included in a network, an elevation angle, an azimuth angle, presence information, and/or a network communication status (e.g., idle, transmit, and receive).

According to an embodiment, the display module 160 may display a UI indicating a service related to the terrestrial network and/or the non-terrestrial network.

According to an embodiment, the service related to the terrestrial network and/or the non-terrestrial network may include, for example, at least one of an emergency message transmission service, a messaging service, voice call, video call, a data communication service, a location-related service, and/or an indicator-related service.

According to an embodiment, the emergency message transmission service may include, but is not limited to, at least one of an SOS service status information provision service (e.g., indication of SOS service availability), a government office information provision service, an emergency contact information provision service, a commercial phrase provision service that minimizes user text inputs, and a questionnaire-based service for rapid emergency communication (e.g., a service of providing options for an accident type, an injury location, medical information (e.g., age, gender, disease information, and medication information)).

According to an embodiment, the messaging service may include, but is not limited to, at least one of a short message service (SMS), a multimedia messaging service (MMS), and a rich communication suite (RCS) message.

According to an embodiment, the data communication service may include a service via various applications (e.g., web browser) providing data communication.

According to an embodiment, the location-related service may include, but is not limited to, at least one of longitude/latitude coordinates, map information related to the location of the non-terrestrial communication device 220, navigation, and street view.

According to an embodiment, the UI is not limited to the mentioned examples and may also be provided through other output devices (e.g., the sound output module 155 of FIG. 1).

According to an embodiment, the wireless communication module 192 may support various types of wireless communication bands supported by the electronic device 101. For example, the wireless communication bands supported by the electronic device 101 may include, but are not limited to, a short-range wireless communication band (e.g., BT and Wifi), a terrestrial network (e.g., cellular network) communication band, and/or a non-terrestrial network band.

According to an embodiment, the electronic device 101 may support a frequency band (e.g., n255 and n256) related to non-terrestrial network wireless communication. The electronic device 101 may perform non-terrestrial network wireless communication using the frequency band related to non-terrestrial network wireless communication, to which the disclosure is not limited. For example, the electronic device 101 may perform non-terrestrial network wireless communication using at least a portion of the frequency band related to terrestrial network wireless communication.

According to an embodiment, the antenna module 197 may transmit or receive a signal or power to or from the outside (e.g., an external electronic device).

According to an embodiment, the electronic device 101 may perform wireless communication with the non-terrestrial network using at least one of a plurality of antennas included in the antenna module 197. The at least one antenna supporting non-terrestrial wireless communication may include a dedicated antenna and/or a shared antenna. The dedicated antenna may include an antenna supporting the non-terrestrial network. The shared antenna may include an antenna supporting a different type of network and the non-terrestrial network together. For example, the electronic device 101 may communicate with at least one satellite (e.g., a GNSS satellite and a satellite for the emergency message service) using at least one dedicated non-terrestrial network antenna. For example, the shared antenna may include an antenna supporting a short-range communication network (e.g., a Bluetooth network and a Wifi network) and/or a terrestrial network (e.g., an LTE network). The electronic device 101 may support the non-terrestrial network using a plurality of antennas among antennas supporting the terrestrial network.

Hereinafter, a satellite is mainly referred to as the non-terrestrial wireless communication device 220 in the disclosure, and even if it is described that the satellite provides wireless communication based on a specific radio access technology (RAT) (e.g., LTE) or a specific function (e.g., BS), this is merely an example and its type is not limited.

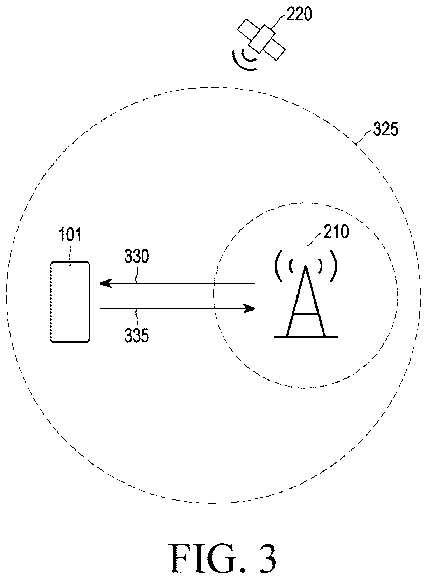

FIG. 3 is a diagram illustrating connection of an electronic device according to an embodiment.

According to an embodiment, the electronic device 101 may be located within coverage 315 (hereinafter, referred to as terrestrial wireless communication coverage 315) of the terrestrial wireless communication device 210 and/or coverage 325 (hereinafter, referred to as non-terrestrial wireless communication coverage 325) of the non-terrestrial wireless communication device 220. The non-terrestrial wireless communication coverage 325 may be (e.g., 50 times or more) larger than the terrestrial wireless communication coverage 315. For example, the non-terrestrial wireless communication coverage 325 may cover an area that the coverage 315 of the terrestrial wireless communication device 210 may not cover, and accordingly, the electronic device 101 may perform communication even in an area where terrestrial wireless communication is not supported.

According to an embodiment, the electronic device 101 may perform cell scanning within the terrestrial wireless communication coverage 315 and/or the non-terrestrial wireless communication coverage 325. The electronic device 101 may identify a cell provided by the terrestrial wireless communication device 210 and/or a cell provided by the non-terrestrial wireless communication device 220 as a result of the cell scanning. When there is a cell satisfying a cell selection condition, the electronic device 101 may perform at least part of an operation of connecting to a network (e.g., the non-terrestrial network and/or the terrestrial network). The connection to the network may include, but is not limited to, for example, at least part of a preceding operation (e.g., camp-on and a connection procedure (e.g., a random access (RA) procedure)) for registration to the network and/or a registration operation (e.g., attach and registration) to the network. When the electronic device 101 needs to disconnect from the network (e.g., move to another network), it may perform at least part of a disconnection operation. The disconnection operation from the network may include, but is not limited to, at least some of detachment from the network, connection release, and/or RLF declaration.

According to an embodiment, the electronic device 101 may perform at least some of cell scanning, disconnection from the network, and/or connection to the network according to its movement 330 or 335.

According to an embodiment, when the electronic device 101 is located within the terrestrial communication coverage 315 included in the non-terrestrial wireless communication coverage 325, or located in a boundary area of the terrestrial communication coverage 315, the electronic device 101 may perform connection to the terrestrial network and/or the non-terrestrial network based on a policy (e.g., priority policy) of the electronic device 101.

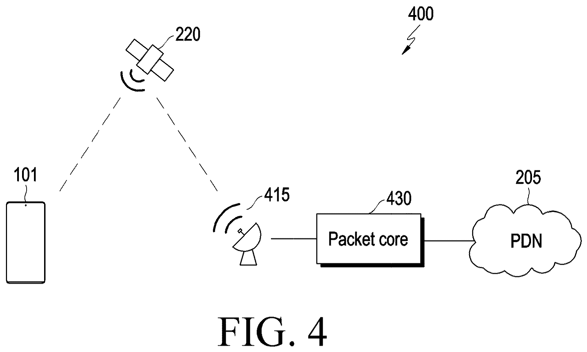

FIG. 4 is a diagram illustrating a non-terrestrial network system 400 according to an embodiment.

Referring to FIG. 4, the non-terrestrial network system 400 may include the non-terrestrial wireless communication device 220, a radio unit 415, and a packet core 430.

According to an embodiment, the non-terrestrial network system 400 may be implemented in a regenerative manner, for example. When implemented in a regenerative manner, at least one non-terrestrial wireless communication device 220 may include a BS (e.g., eNode B). The non-terrestrial network system 400 may be implemented in a bent-pipe manner, for example. The bent-pipe manner may include a passive relay method in which frequency conversion and power amplification are performed on a received signal. When the non-terrestrial network system 400 is implemented in a bent-pipe manner, the at least one non-terrestrial wireless communication device 220 may include a repeater that converts (e.g., amplifies) and transmits a signal. The implementation method of the non-terrestrial network system 400 and the role of the non-terrestrial wireless communication device 220 described in FIG. 4 are merely an example, to which the disclosure is not limited.

According to an embodiment, the non-terrestrial wireless communication device 220 may include at least one satellite. The non-terrestrial wireless communication device 220 may perform communication with the electronic device 101, for example, using a terrestrial network (e.g., cellular network) band and/or a non-terrestrial network band. The terrestrial network band may be, but is not limited to, for example, an operating band supported by LTE and/or new radio (NR). The non-terrestrial network band may include, but is not limited to, a band (e.g., n255 and/or n256 band) defined by the 3GPP.

According to an embodiment, at least one radio unit 415 may receive a signal from the non-terrestrial wireless communication device 220 and transmit it to the packet core 430. The radio unit 415 and the non-terrestrial wireless communication device 220 may perform communication using the non-terrestrial network band, for example. The non-terrestrial network band may be different from the terrestrial network band, but they may also be set to be the same in some cases.

According to an embodiment, at least one packet core 430 may transmit and receive data related to the electronic device 101 using the radio unit 415. Accordingly, the packet core 430 may process the data related to the electronic device 101 and transmit it to a packet data network (PDN) 440 (e.g., Internet). The packet core 415 may include, but is not limited to, for example, at least a portion of an evolved packet core (EPC) and/or a 5G core (5GC). The packet core 430 may include a packet core related to an operator of the non-terrestrial wireless communication device 220 and/or a packet core related to a mobile network operator (MNO). The packet core 430 may additionally be connected to a public switched telephone network (PSTN) (not shown) to transmit and receive the data related to the electronic device 101.

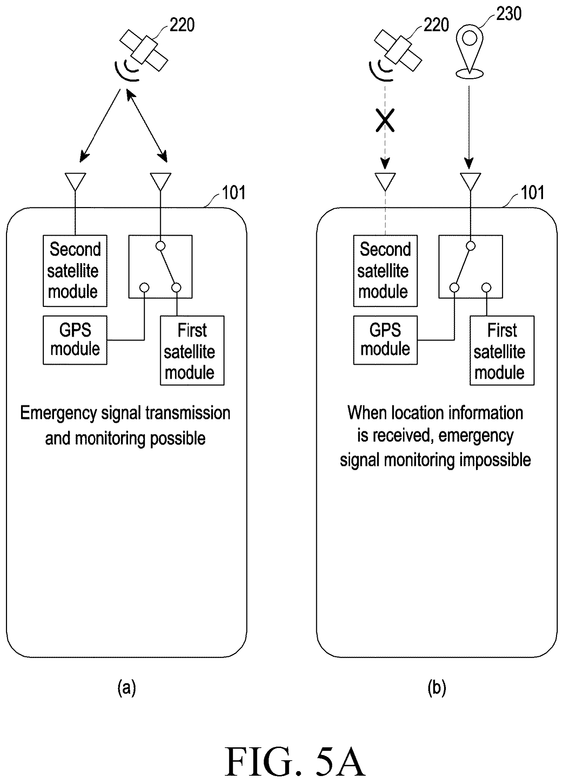

FIG. 5A is a diagram illustrating an operation of monitoring a signal transmitted from a first satellite and receiving location information from a second satellite by an electronic device according to a comparative embodiment.

Referring to (a) of FIG. 5A, the electronic device 101 according to the comparative embodiment may monitor a signal transmitted from a first satellite 220 via a second antenna, while transmitting and receiving a signal to and from the first satellite 220 via a first antenna. For example, the first satellite 220 may be a satellite (e.g., Iridium satellite) for the emergency message service.

Referring to (b) of FIG. 5A, the electronic device 101 according to the comparative embodiment may receive location information about the electronic device 101 from a second satellite 230. For example, the second satellite 230 may be a GNSS satellite or GPS satellite. When receiving the location information about the electronic device 101 from the second satellite 230, the electronic device 101 according to the comparative embodiment may not be able to monitor a signal transmitted from the first satellite 220. For example, because a first satellite module is not connected to the first antenna, the electronic device 101 is not capable of monitoring a signal transmitted from the first satellite 220 via the first antenna. Moreover, because a second satellite module (e.g., satellite DRx module) is activated or deactivated in conjunction with the first satellite module, the electronic device 101 may not be able to monitor the signal transmitted from the first satellite 220 via the second antenna.

That is, the conventional electronic device 101 is not capable of identifying its location, when monitoring a signal transmitted from the first satellite 220 for the emergency message service. Moreover, when the conventional electronic device 101 receives the location information about the electronic device 101 from the second satellite 230, it has no choice but to stop the emergency message service operation.

When the electronic device 101 provides the emergency message service, the location of the electronic device 101 may be important information. For example, the electronic device 101 may transmit a signal to the first satellite 220 based on the identified location of the electronic device 101. When the location of the electronic device is not accurate, the electronic device 101 may not be able to accurately transmit a signal to where the first satellite 220 is located. Further, the electronic device 101 needs to identify the user's accurate location, for an emergency message. For example, the electronic device 101 may need its accurate location, for emergency rescue of the user.

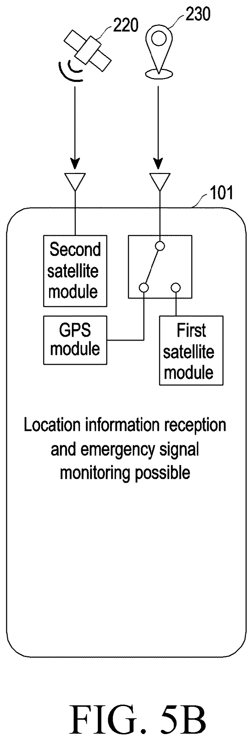

FIG. 5B is a diagram illustrating an operation of monitoring a signal transmitted from a first satellite by an electronic device, while receiving location information from a second satellite according to an embodiment.

Referring to FIG. 5B, the electronic device 101 according to an embodiment may monitor a signal transmitted from the first satellite 220 using the second satellite module connected to the second antenna, while receiving location information about the electronic device 101 from the second satellite 230.

Through this, the electronic device 101 according to an embodiment has the effect of being able to identify the accurate location of the electronic device, while monitoring a signal for the emergency message service. Further, the electronic device 101 may provide an accurate and effective emergency message service to the user based on the location of the electronic device 601 using the GNSS satellite.

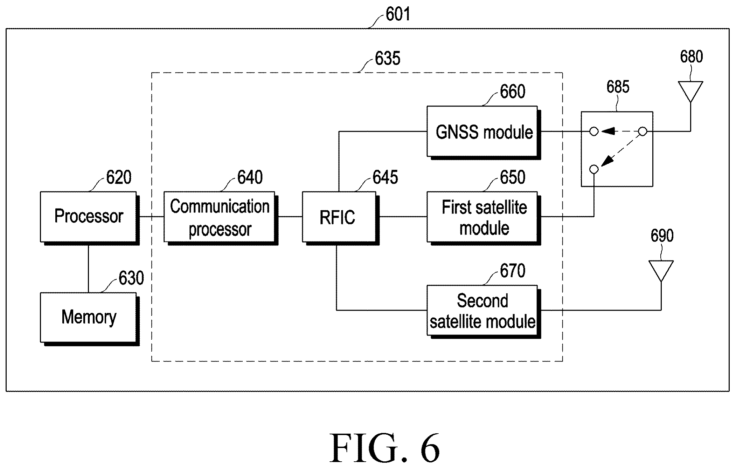

FIG. 6 is a block diagram illustrating an electronic device according to an embodiment.

Referring to FIG. 6, according to an embodiment, an electronic device 601 may include a processor 620, memory 630, a wireless communication module 635, a first antenna 680, a switch 685, and a second antenna 690. For example, the electronic device 601 may be implemented identically or similarly to the electronic device 101 described with reference to FIGS. 1 to 4. According to another embodiment, the electronic device 601 may further include at least one of the components of the electronic device 101 of FIG. 1.

According to an embodiment, the processor 620 may control the overall operations of the electronic device 601. Depending on implementation, the processor 620 may provide a control signal to a communication processor 640 to control the communication function of the electronic device 601. For example, the processor 620 may be implemented identically or similarly to the processor 120 of FIG. 1.

According to an embodiment, the memory 630 may store data of the electronic device 601. For example, the memory 630 may be implemented identically or similarly to the memory 130 of FIG. 1.

According to an embodiment, the wireless communication module 635 may include the communication processor 640, a radio frequency integrated circuit (RFIC) 645, a first satellite module 650, a GNSS module 660, and a second satellite module 670.

Although FIG. 6 illustrates a single RFIC 645 connected to the first satellite module 650, the GNSS module 660, and the second satellite module 670, the technical idea of the disclosure may not be limited thereto. For example, one or more RFICs may be connected to the first satellite module 650, the GNSS module 660, and the second satellite module 670 via various routes.

According to an embodiment, the communication processor 640 may support establishment of a communication channel in a band to be used for wireless communication with a non-terrestrial network, and non-terrestrial network communication via the established communication channel. For example, the communication processor 640 may support establishment of a communication channel in a band to be used for wireless communication with an emergency message service satellite, and wireless communication with the emergency message service satellite via the established communication channel. Further, the communication processor 640 may support establishment of a communication channel in a band to be used for wireless communication with a GNSS satellite, and wireless communication with the GNSS satellite via the established communication channel.

According to an embodiment, the communication processor 640 may be implemented in a single chip or a single package. According to embodiments, the communication processor 640 may be formed in a single chip or single package with the processor 620 or 120, the auxiliary processor 123, or the communication module 190. In this case, the single chip or single package may include memory (or storage means) storing instructions that cause at least some of operations according to embodiments to be performed, and a processing circuit (or an arithmetic circuit, the name of which is not limited) for executing the instructions.

According to an embodiment, the RFIC 645 may process a frequency signal used in the non-terrestrial network. For example, during transmission, the RFIC 645 may convert a baseband signal generated by the communication processor 640 into a frequency signal used in the non-terrestrial network. During reception, an RF signal may be obtained from the non-terrestrial network (e.g., an emergency message service satellite or a GNSS satellite) via an antenna (e.g., the first antenna 680 and/or the second antenna 690), and preprocessed via a radio frequency front-end (RFFE) (e.g., the first satellite module 650, the GNSS module 660, and/or the second satellite module 670). The RFIC 645 may convert the preprocessed RF signal into a baseband signal so that it may be processed by the communication processor 640.

According to an embodiment, the first satellite module 650 may convert or generate a frequency signal for communicating with the first satellite based on a baseband signal output from the RFIC 645. According to an embodiment, the first satellite module 650 may preprocess an RF signal transmitted from the first satellite and received via the first antenna 680. The first satellite module 650 may output the preprocessed signal to the RFIC 645. For example, the first satellite may be an emergency message service satellite (e.g., Iridium satellite). Depending on implementation, the first satellite module 650 may convert or generate a frequency signal for communicating with the first satellite, without the RFIC 645. Alternatively, the RFIC 645 may convert or generate a frequency signal for communicating with the first satellite.

According to an embodiment, the GNSS module 660 may convert or generate a frequency signal for communicating with the second satellite based on a baseband signal output from the RFIC 645. Further, the GNSS module 660 may preprocess an RF signal transmitted from the second satellite and received via the first antenna 680. The GNSS module 660 may output the preprocessed signal to the RFIC 645. For example, the second satellite may be a GNSS satellite or GPS satellite.

According to an embodiment, the first antenna 680 may be connected to the first satellite module 650 or the GNSS module 660 via the switch 685. For example, the switch 685 may connect the first antenna 680 and the first satellite module 650 under the control of the processor 620 or the communication processor 640. Alternatively, the switch 685 may connect the first antenna 680 and the GNSS module 660 under the control of the processor 620 or the communication processor 640. For example, the switch 685 may be a switch module of the first antenna 680. The first antenna 680 may provide a signal (e.g., RF signal) transmitted from the first satellite to the first satellite module 650. Alternatively, the first antenna 680 may provide a signal (e.g., RF signal) transmitted from the second satellite to the GNSS module 660. For example, the first antenna 680 may be implemented as a main antenna of the electronic device 601.

According to an embodiment, the second satellite module 670 may preprocess an RF signal transmitted from the first satellite and received via the second antenna 690. The second satellite module 670 may output the preprocessed signal to the RFIC 645. For example, unlike the first satellite module 650, the second satellite module 670 may not perform the operation of converting a frequency signal for transmission. For example, the second satellite module 670 may only perform the operation of preprocessing an RF signal received from the first satellite.

According to an embodiment, the second antenna 690 may be connected to the second satellite module 670. The second antenna 690 may provide a signal (e.g., RF signal) transmitted from the first satellite to the second satellite module 670. For example, the second antenna 690 may be implemented as a diversity antenna of the electronic device 601.

According to an embodiment, the communication processor 640 may connect the first antenna 680 and the first satellite module 650 via the switch 685 in a first state of the first satellite module 650 related to the emergency message service (or SOS service). The communication processor 640 may transmit and receive signals to and from the first satellite using the first satellite module 650 connected to the first antenna 680. For example, the first state may refer to a transmit state where the electronic device 601 transmits and receives signals to and from the first satellite using the first satellite module 650.

According to an embodiment, the communication processor 640 may connect the first antenna 680 and the first satellite module 650 via the switch 685 in a second state or a third state of the first satellite module 650 related to the emergency message service (or SOS service), which is different from the first state. The communication processor 640 may monitor a signal (or signal strength) transmitted from the first satellite, using the first satellite module 650 connected to the first antenna 680. For example, the second state may refer to a listen state where the electronic device 601 monitors a ring alert signal transmitted from the first satellite. The electronic device 601 may monitor the ring alert signal transmitted from the first satellite in the second state. The third state may refer to an idle state of the first satellite module 650. When the electronic device 601 fails to enter the first state or a timeout occurs in the second state, the electronic device 601 may enter the third state. The electronic device 601 may also monitor a signal (or signal strength) transmitted from the first satellite in the third state.

According to an embodiment, the communication processor 640 may monitor a signal transmitted from the first satellite via the second antenna 690 in the first state, the second state, and the third state of the first satellite module 650.

According to an embodiment, the communication processor 640 may connect the GNSS module 660 and the first antenna 680 via the switch 685 in the second state or the third state of the first satellite module 650. When the first antenna 680 is connected to the GNSS module 660 via the switch 685, the communication processor 640 may not monitor a signal transmitted from the first satellite via the first antenna 680. When the GNSS module 660 and the first antenna 680 are connected via the switch 685, the communication processor 640 may receive location information about the electronic device 601 from the second satellite, using the GNSS module 660 connected to the first antenna 680. The communication processor 640 may update the location of the electronic device 601 based on the received location information. At this time, the communication processor 640 may monitor a signal transmitted from the first satellite using the second satellite module 670 connected to the second antenna 690, while receiving the location information about the electronic device 601.

Using the above-described method, the electronic device 601 according to an embodiment may monitor a signal transmitted from the first satellite using the second satellite module 670 connected to the second antenna 690, while identifying the location of the electronic device 601. Through this, the electronic device 601 according to an embodiment has the effect of being able to identify the accurate location of the electronic device, while monitoring a signal for the emergency message service. Further, the electronic device 601 may provide an accurate and effective emergency message service to the user based on the location of the electronic device 601 using the GNSS satellite.

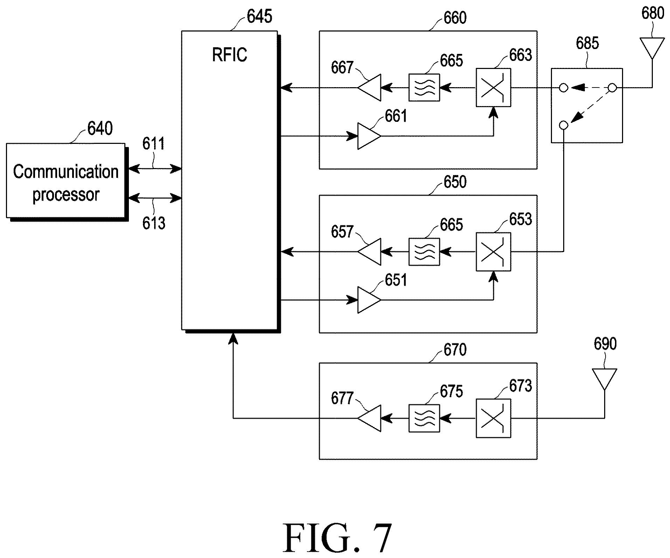

FIG. 7 is a block diagram illustrating an electronic device for supporting non-terrestrial network communication according to an embodiment.

Referring to FIG. 7, according to an embodiment, a wireless communication module (e.g., the wireless communication module 635 of FIG. 6) of the electronic device (e.g., the electronic device 601 of FIG. 6) may include the communication processor 640, the RFIC 645, the first satellite module 650, the GNSS module 660, and the second satellite module 670. The electronic device 601 may further include the first antenna 680, the switch 685, and the second antenna 690.

According to an embodiment, the first antenna 680 may radiate an RF signal or receive a signal transmitted from the outside. For example, the first antenna 680 may transmit and receive signals corresponding to non-terrestrial network communication. The second antenna 690 may receive a signal transmitted from the outside. For example, the second antenna 690 may receive a signal corresponding to non-terrestrial network communication.

According to an embodiment, the switch 685 may change a transmission/reception path of a signal for the first antenna 680 under the control of the communication processor 640 or the RFIC 645. For example, the switch 685 may electrically connect the first antenna 680 and the first satellite module 650 based on a control that activates an input/output port of the first satellite module 650. The switch 685 may electrically connect the first antenna 680 and the GNSS module 660 based on a control that activates an input/output port of the GNSS module 660.

According to an embodiment, each of the first satellite module 650, the second satellite module 670, and the GNSS module 660 may include a corresponding RFFE.

In an embodiment, the first satellite module 650 may process an RF signal for wireless communication with the first satellite. The first satellite module 650 may include a duplexer 653, a filter 655, a low-noise amplifier (LNA) 657, and a power amplifier (PA) 651.

According to an embodiment, the duplexer 653 may include a transmission filter and a reception filter to enable the first antenna 680 to perform signal transmission and reception. The first antenna 680 may receive a signal transmitted from the first satellite (e.g., Iridium satellite). For example, the first antenna 680 may receive a signal related to the emergency message transmission service from the first satellite. The signal received by the first antenna 680 may be transmitted to the duplexer 653 via the switch 685. An RF signal output from the duplexer 653 may be input to the LNA 657 through the filter 655. A signal of a frequency band corresponding to non-terrestrial network communication (e.g., the first satellite) output from the filter 655 may be amplified by the LNA 657. The signal amplified by the LNA 657 may be transmitted to the RFIC 645.

Depending on implementation, the first satellite module 650 may include a switch (e.g., a switch such as the switch 685) instead of the duplexer 653. For example, a transmission signal and a reception signal may be branched into the same frequency band by the switch in time division duplexing (TDD). For example, a signal received by the first antenna 680 may be transmitted to the switch. An RF signal output from the switch may be input to the LNA 657 through the filter 655.

According to an embodiment, an RF signal output from the RFIC 645 may be amplified by the PA 651. The signal amplified by the PA 651 may be transmitted to the first antenna 680 via the duplexer 653 and the switch 685. The first antenna 680 may transmit a signal corresponding to non-terrestrial network communication (e.g., the first satellite) based on the signal amplified by the PA 651. For example, the first antenna 680 may transmit a signal related to the emergency message transmission service to the first satellite.

In an embodiment, the GNSS module 660 may process an RF signal for wireless communication with the second satellite. The GNSS module 660 may include a duplexer 663, a filter 665, an LNA 667, and a PA 661. Depending on implementation, the PA 661 may be excluded from the GNSS module 660.

According to an embodiment, the duplexer 663 may include a transmission filter and a reception filter to enable the first antenna 680 to perform signal transmission and reception. The first antenna 680 may receive a signal transmitted from the second satellite (e.g., GNSS satellite). For example, the first antenna 680 may receive a signal indicating the location (e.g., location information) of the electronic device 601 from the second satellite. The signal received by the first antenna 680 may be transmitted to the duplexer 663 via the switch 685. An RF signal output from the duplexer 663 may be input to the LNA 667 through the filter 665. A signal of a frequency band corresponding to non-terrestrial network communication (e.g., the second satellite) output from the filter 665 may be amplified by the LNA 667. The signal amplified by the LNA 667 may be transmitted to the RFIC 645.

According to an embodiment, an RF signal output from the RFIC 645 may be amplified by the PA 661. The signal amplified by the PA 661 may be transmitted to the first antenna 680 via the duplexer 663 and the switch 685. The first antenna 680 may transmit a signal corresponding to non-terrestrial network communication (e.g., the second satellite) based on the signal amplified by the PA 661. For example, the first antenna 680 may transmit a signal related to the location of the electronic device 601 to the second satellite.

In an embodiment, the second satellite module 670 may process an RF signal for wireless communication with the first satellite. The second satellite module 670 may include a duplexer 673, a filter 675, and an LNA 677. Depending on implementation, the duplexer 673 may be excluded from the second satellite module 670.

According to an embodiment, the duplexer 673 may include a reception filter to enable the second antenna 690 to perform signal reception. The second antenna 690 may receive a signal transmitted from the first satellite (e.g., Iridium satellite). For example, the second antenna 690 may receive a signal related to the emergency message transmission service from the first satellite. The signal received by the first antenna 680 may be transmitted to the duplexer 673. An RF signal output from the duplexer 673 may be input to the LNA 677 through the filter 675. A signal of the frequency band corresponding to non-terrestrial network communication (e.g., the first satellite) output from the filter 675 may be amplified by the LNA 677. The signal amplified by the LNA 677 may be transmitted to the RFIC 645.

According to an embodiment, the RFIC 645 may output an RF signal of the frequency band corresponding to non-terrestrial network communication (e.g., the first satellite or the second satellite) during transmission. The RFIC 645 may process RF signals transmitted by the first satellite module 650, the second satellite module 670, and the GNSS module 660 during reception. Baseband signals converted by the RFIC 645 may be transmitted to the communication processor 640 via at least one signal line 611.

According to an embodiment, the communication processor 640 may control the switching operation of the switch 685. The communication processor 640 may control the switch 685 based on transmitting a control signal to the RFIC 645 via a control line 613. For example, the communication processor 640 may determine a switching timing of the switch 685. Further, the communication processor 640 may monitor a signal transmitted from the first satellite via the second antenna 690, while receiving location information about the electronic device 601 from the second satellite via the first antenna 680, based on transmitting a control signal to the RFIC 645 via the control line 613.

Hereinafter, at least some of the operations performed by the electronic device 601 described below may be controlled by at least one of the processor 620 or the communication processor 640. However, for convenience of description, the operations will be described as performed by the electronic device 601.

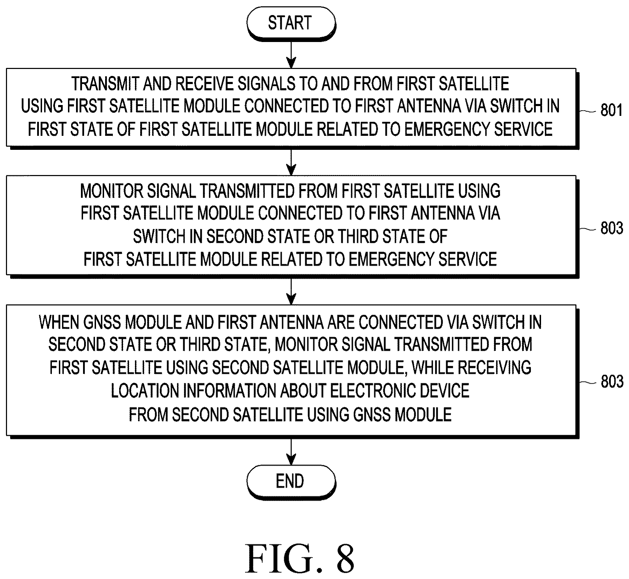

FIG. 8 is a flowchart illustrating an operation of monitoring a signal transmitted from a first satellite by an electronic device, while receiving location information from a second satellite according to an embodiment.

Referring to FIG. 8, according to an embodiment, in operation 801, an electronic device (e.g., the electronic device 601 of FIG. 6) may transmit and receive signals to and from a first satellite (e.g., Iridium satellite), using the first satellite module 650 connected to a first antenna (e.g., the first antenna 680 of FIG. 6) via a switch (e.g., the switch 685 of FIG. 6) in a first state (e.g., transmit state) related to an emergency service (or emergency messaging transmission service). At this time, the electronic device 601 may receive a signal from the first satellite (e.g., Iridium satellite) using a second satellite module (e.g., the second satellite module 670 of FIG. 6) connected to a second antenna (e.g., the second antenna 690 of FIG. 6). For example, each of the first antenna 680 and the second antenna 690 may receive the same signal transmitted from the first satellite.

According to an embodiment, in operation 803, the electronic device 601 may monitor a signal transmitted from the first satellite using the first satellite module 650 connected to the first antenna 680 via the switch 685 in a second state (e.g., listen state) or a third state (e.g., idle state) of the first satellite module 650 related to the emergency service (or emergency message transmission service).

According to an embodiment, the electronic device 601 may connect the GNSS module 660 and the first antenna 680 via the switch 685 in the second state or the third state of the first satellite module 650. For example, when the electronic device 601 determines that it needs to update its location, it may connect the GNSS module 660 and the first antenna 680 via the switch 685.

According to an embodiment, in operation 805, when the GNSS module 660 and the first antenna 680 are connected via the switch 685 in the second state or the third state of the first satellite module 650, the electronic device 601 may monitor a signal transmitted from the first satellite using the second satellite module 670, while receiving location information about the electronic device 601 from a second satellite (e.g., GNSS satellite) using the GNSS module 680.

Through the above-described method, the electronic device 601 may identify and update its location by receiving the location information from the second satellite, while maintaining the operation of monitoring a signal for the emergency message service transmitted from the first satellite.

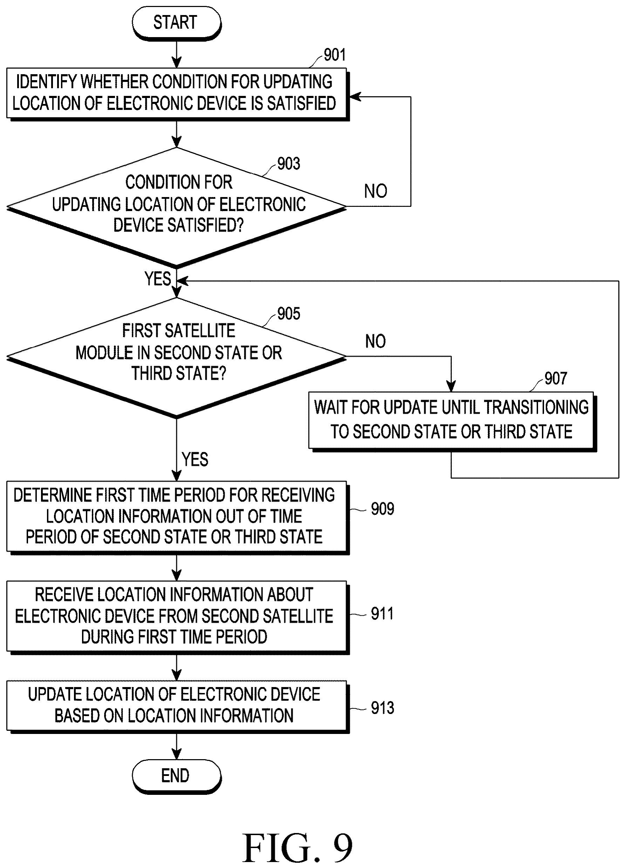

FIG. 9 is a flowchart illustrating an operation of identifying a time period for receiving location information from a second satellite by an electronic device according to an embodiment.

Referring to FIG. 9, according to an embodiment, in operation 901, an electronic device (e.g., the electronic device 601 of FIG. 6) may identify whether a condition for updating the location of the electronic device 601 is satisfied. For example, when the electronic device 601 detects its effective movement through a sensor included in the electronic device 601, it may identify or determine that the condition for updating the location of the electronic device 601 is satisfied. Alternatively, when a specified time has elapsed from a time when a location was previously identified, the electronic device 601 may identify or determine that the condition for updating the location of the electronic device 601 is satisfied.

According to an embodiment, when it is identified that the condition for updating the location of the electronic device 601 is not satisfied (No in operation 903), the electronic device 601 may identify or monitor whether the condition for updating the location of the electronic device 601 is satisfied.

According to an embodiment, when it is identified that the condition for updating the location of the electronic device 601 is satisfied (Yes in operation 903), the electronic device 601 may identify whether a first satellite module (the first satellite module 650 of FIG. 6) is currently in a second state or a third state in operation 905.

According to an embodiment, when it is identified that a first satellite module (the first satellite module 650 of FIG. 6) is not in the second state or the third state (No in operation 905), the electronic device 601 may wait for the update until the electronic device 601 transitions to the second state or the third state in operation 907. For example, when it is identified that the first satellite module 650 is in the first state (e.g., transmit state), the electronic device 601 may wait for the update until the electronic device 601 transitions to the second state (e.g., listen state) or the third state (e.g., idle state).

According to an embodiment, when it is identified that the first satellite module 650 is in the second state or the third state (Yes in operation 905), the electronic device 601 may determine a first time period for receiving location information about the electronic device 601 from the second satellite (e.g., GNSS satellite) within the time period of the second state or the third state in operation 909.

According to an embodiment, in operation 911, the electronic device 601 may receive location information about the electronic device 601 from the second satellite via a first antenna (e.g., first antenna 680 of FIG. 6) during the first time period. For example, the electronic device 601 may control a switch (e.g., the switch 685 of FIG. 6) to connect the first antenna 680 and the GNSS module 660. Depending on implementation, the electronic device 601 may also receive location information about the electronic device 601 from the second satellite at each specified time. At this time, the electronic device 601 may monitor a signal transmitted from the first satellite via a second antenna (e.g., the second antenna 690 of FIG. 6).

According to an embodiment, in operation 913, the electronic device 601 may update the location of the electronic device 601 based on the location information about the electronic device 601 received from the second satellite. After receiving the location information about the electronic device 601 from the second satellite during the first time period, the electronic device 601 may control the switch (e.g., the switch 685 of FIG. 6) to connect the first antenna 680 and the first satellite module 650. When the first antenna 680 and the first satellite module 650 are connected, the electronic device 601 may monitor a signal received from the first satellite via the first antenna 680.

Through the above-described method, the electronic device 601 may identify and update its location by receiving the location information from the second satellite, while maintaining the operation of monitoring a signal for the emergency message service transmitted from the first satellite.

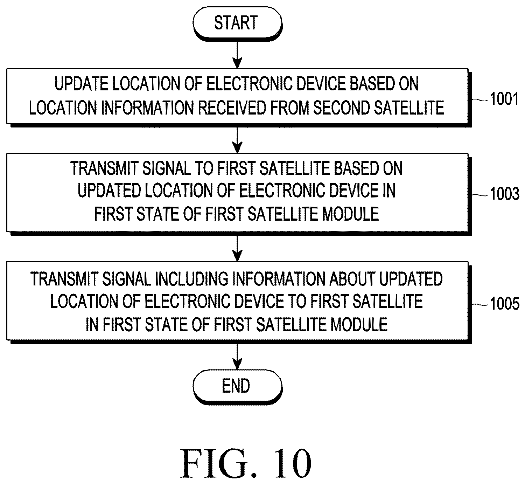

FIG. 10 is a flowchart illustrating an operation of updating location information and transmitting a signal to a first satellite by an electronic device according to an embodiment.

Referring to FIG. 10, according to an embodiment, in operation 1001, an electronic device (e.g., the electronic device 601 of FIG. 6) may update its location based on location information about the electronic device 601 received from a second satellite (e.g., GNSS satellite).

According to an embodiment, in operation 1003, after updating the location of the electronic device 601, the electronic device 601 may transmit a signal to a first satellite (e.g., Iridium satellite) based on the updated location of the electronic device in a first state (e.g., transmit state) of a first satellite module (e.g., the first satellite module 650 of FIG. 6). For example, when the location of the electronic device 601 is not accurate, the electronic device 601 may not be able to accurately transmit the signal to where the first satellite is located. Accordingly, the electronic device 601 may transmit the signal to the first satellite (e.g., Iridium satellite) based on the updated location of the electronic device 601.

According to an embodiment, in operation 1005, after updating the location of the electronic device 601, the electronic device 601 may transmit a signal including information about the updated location of the electronic device 601 to the first satellite. For example, the electronic device 101 may need information about the accurate location of the electronic device 101 for a user's emergency rescue. Accordingly, the electronic device 601 may transmit a signal indicating the updated location of the electronic device 601 to the first satellite for the emergency message transmission service.

The order of operations 1003 and 1005 may not be limited to the above order. For example, operation 1005 may be performed before operation 1003. Alternatively, operation 1005 may be performed simultaneously with operation 1003. Alternatively, depending on implementation, the electronic device 601 may perform only one of operation 1003 and operation 1005.

Through the above-described method, the electronic device 601 may provide the emergency message transmission service more accurately and efficiently than conventionally.

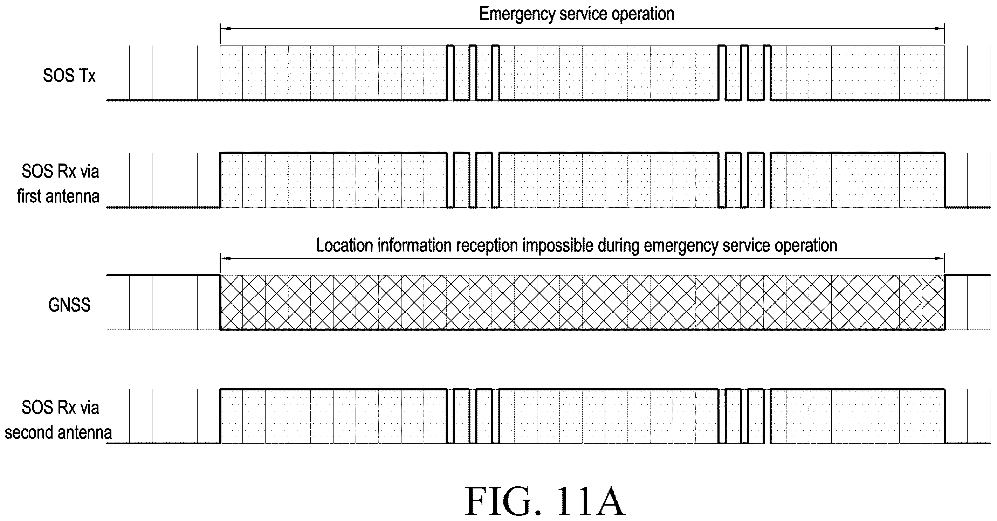

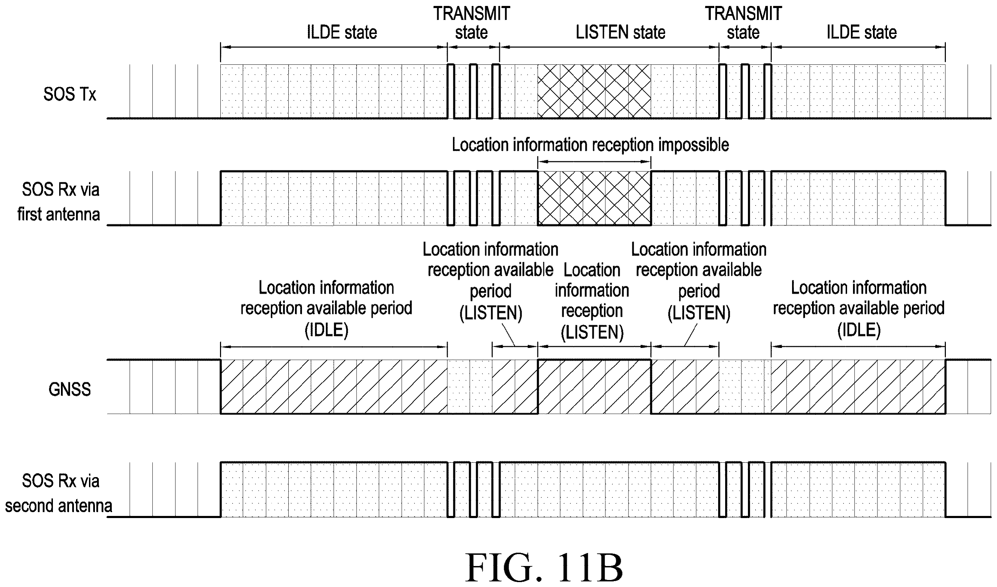

FIG. 11A is a timing diagram illustrating an operation of receiving location information from a second satellite by an electronic device according to a comparative embodiment. FIG. 11B is a timing diagram illustrating an operation of monitoring a signal transmitted from a first satellite by an electronic device, while receiving location information from a second satellite according to an embodiment.

Referring to FIGS. 11A and 11B, "SOS Tx" may indicate a state where an electronic device (e.g., the electronic device 601 of FIG. 6) transmits a signal to a first satellite (e.g., a satellite for the emergency message transmission service). "SOS Rx via first antenna" may indicate a state where the electronic device 601 receives a signal from the first satellite via a first antenna (e.g., the first antenna 680 of FIG. 6). "SOS Rx via second antenna" may indicate a state where the electronic device 601 receives a signal from the first satellite via a second antenna (e.g., the second antenna 690 of FIG. 6). "GNSS" may indicate a state where the electronic device 601 receives a signal from a second satellite (e.g., GNSS satellite) via the first antenna 680. For example, a high level may indicate an active state, and a low level may indicate an inactive state.

Referring to FIG. 11A, the electronic device according to the comparative embodiment may monitor a signal transmitted from the first satellite 220 via the second antenna while transmitting and receiving signals to and from the satellite (e.g., the first satellite 220 of FIG. 5A) for the emergency message transmission service via the first antenna. However, the electronic device 101 according to the comparative embodiment is not capable of receiving location information about the electronic device 101 from a GPS satellite (e.g., the second satellite 230 of FIG. 5A), while transmitting and receiving signals to and from the satellite 220 for the emergency message transmission service. For example, because the GNSS module included in the electronic device is not connected to the first antenna, the electronic device may not receive a signal transmitted from the GNSS satellite 230 via the first antenna.

When receiving location information about the electronic device from the second satellite 230, the electronic device according to the comparative embodiment is not capable of transmitting and receiving signals to and from the first satellite 220. For example, because the first satellite module is not connected to the first antenna, the electronic device 101 may not receive a signal transmitted from the satellite 220 for the emergency message transmission service via the first antenna. Further, because the second satellite module is activated or deactivated in conjunction with the first satellite module, the electronic device may not monitor the signal transmitted from the emergency message transmission satellite 220 via the second antenna.

As described above, the electronic device according to the comparative embodiment is not capable of identifying its location, when monitoring a signal transmitted from the first satellite 220 for the emergency message transmission service. Further, when the electronic device according to the comparative embodiment receives location information about the electronic device 101 from the second satellite 230, it has no choice but to stop the emergency message transmission service operation.

Referring to FIG. 11B, an electronic device (e.g., the electronic device 601 of FIG. 6) according to an embodiment may perform GNSS positioning in the listen state or the idle state of a first satellite module (e.g., the first satellite module 650 of FIG. 6). The electronic device 601 may receive location information from a second satellite (e.g., GNSS satellite) and perform or proceed with a GNSS positioning operation by connecting a first antenna (e.g., the first antenna 680 of FIG. 6) and a GNSS module (e.g., the GNSS module 660 of FIG. 6) in the listen state or the idle state of the first satellite module 650. For example, time periods corresponding to the listen state and the idle state of the first satellite module 650 may be GNSS positioning available periods. For example, the electronic device 601 may determine a first time period (e.g., a portion of the time period of the listen state) for performing GNSS positioning out of the time periods of the listen state and the idle state of the first satellite module 650. The electronic device 601 may perform a GNSS positioning operation by connecting the first antenna 680 and the GNSS module 660 during the first time period. At this time, the electronic device 601 may not monitor a signal transmitted from a first satellite (e.g., a satellite for the emergency message transmission service) via the first antenna 680.

According to an embodiment, the electronic device 601 may receive or monitor a signal transmitted from the first satellite using a second satellite module (e.g., the second satellite module 670 of FIG. 6) in the transmit state, the listen state, and the idle state of the first satellite module 650. The electronic device 601 may receive or monitor a signal transmitted from the first satellite, even when performing the GNSS positioning operation during the first time period.

The success rate of message transmission/reception for the emergency message transmission service function may greatly vary depending on the alignment between the first satellite (e.g., Iridium satellite) and the electronic device 601. To this end, the electronic device 601 needs to direct a maximum radiation direction of at least one antenna included in the electronic device 601 towards the first satellite (e.g., Iridium satellite). The directing operation may be based on accurate location information about the electronic device 601. However, conventionally, it is impossible to perform GNSS positioning after the emergency message transmission service function starts, which makes it impossible to update the accurate location of the electronic device 601. These problems may be a major cause of a significant decrease in the usability of the emergency message transmission service function, when the electronic device moves rapidly.

Through the above-described method, the electronic device 601 may identify and update its location by receiving location information from the second satellite, while maintaining the operation of monitoring a signal for the emergency message service transmitted from the first satellite.

When performing the emergency message transmission service function, the electronic device 601 according to an embodiment of the disclosure may update the accurate location of the electronic device 601 by performing GNSS positioning in the listen state and idle state of the first satellite module 650. Through this, the electronic device 601 may improve the accuracy of the directing operation in the subsequent transmit state, thereby increasing the success rate of message transmission/reception. Further, the electronic device 601 may accurately transmit user information to a recipient (e.g., an emergency rescue organization) in an emergency, thereby enhancing a user experience level for the emergency message transmission service function.

According to an embodiment, the electronic device 101 or 601 may include the first antenna 680, the second antenna 690, the GNSS module 660, the first satellite module 650, the second satellite module 670 connected to the second antenna, the switch 685 configured to connect any one of the first satellite module and the GNSS module to the first antenna;, and the at least one processor 120, 620, or 640. According to an embodiment, the at least one processor may be configured to, in a first state of the first satellite module related to an emergency service, transmit and receive a signal to and from the first satellite using the first satellite module connected to the first antenna via the switch. According to an embodiment, a signal may be received from the first satellite using the second satellite module connected to the second antenna. According to an embodiment, the at least one processor may be configured to, in a second state or a third state of the first satellite module related to the emergency service, different from the first state, monitor a signal transmitted from the first satellite using the first satellite module connected to the first antenna via the switch. According to an embodiment, the at least one processor may be configured to, when the GNSS module and the first antenna are connected via the switch in the second state or the third state, monitor a signal transmitted from the first satellite using the second satellite module connected to the second antenna, while receiving location information about the electronic device from the second satellite using the GNSS module connected to the first antenna.

According to an embodiment, the at least one processor may be configured to, in the second state, monitor reception of a ring alert signal transmitted from the first satellite using the second satellite module connected to the second antenna, while receiving the location information from the second satellite using the GNSS module connected to the first antenna. According to an embodiment, the second state may include a listen state of the first satellite module.

According to an embodiment, the at least one processor may be configured to, in the third state, monitor a strength of the signal transmitted from the first satellite using the second satellite module connected to the second antenna, while receiving the location information from the second satellite using the GNSS module connected to the first antenna. According to an embodiment, the third state may include an idle state of the first satellite module.

According to an embodiment, the at least one processor may be configured to identify whether a condition for updating a location of the electronic device is satisfied. According to an embodiment, the at least one processor may be configured to, when it is identified that the condition is satisfied, control the switch to connect the GNSS module and the first antenna to each other in the second state or the third state.

According to an embodiment, the at least one processor may be configured to, when it is identified that the condition is satisfied, determine a first time period for receiving the location information out of a time period of the second state or the third state. According to an embodiment, the at least one processor may be configured to control the switch to connect the GNSS module and the first antenna to each other during the first time period.

According to an embodiment, the at least one processor may be configured to receive the location information from the second satellite via the first antenna during the first time period. According to an embodiment, the at least one processor may be configured to update the location of the electronic device based on the location information.

According to an embodiment, the at least one processor may be configured to, after updating the location of the electronic device, transmit a signal to the first satellite based on the updated location of the electronic device in the first state of the first satellite module. According to an embodiment, the first state may include a transmit state of the first satellite module.

According to an embodiment, the at least one processor may be configured to, after updating the location of the electronic device, transmit a signal including information about the updated location of the electronic device to the first satellite in the first state of the first satellite module.

According to an embodiment, the at least one processor may be configured to, in the second state or the third state, control the switch to connect the GNSS module and the first antenna to each other in every specified time period. According to an embodiment, the at least one processor may be configured to, during the specified time period, receive the location information about the electronic device from the second satellite via the first antenna. According to an embodiment, the at least one processor may be configured to update the location of the electronic device based on the location information.

According to an embodiment, the at least one processor may be configured to monitor a signal transmitted from the first satellite via the second antenna in the first state, the second state, and the third state.

According to an embodiment, the first antenna may be implemented as a main antenna, and the second antenna may be implemented as a diversity antenna.

According to an embodiment, a method of operating the electronic device 101 or 601 may include, in a first state of a first satellite module included in the electronic device, related to an emergency service, transmitting and receiving a signal to and from a first satellite using the first satellite module connected to a first antenna included in the electronic device via a switch included in the electronic device. According to an embodiment, a signal may be received from the first satellite using a second satellite module connected to a second antenna. According to an embodiment, the method may include, in a second state or a third state of the first satellite module related to the emergency service, different from the first state, monitoring a signal transmitted from the first satellite using the first satellite module connected to the first antenna via the switch. According to an embodiment, the method may include, when a GNSS module included in the electronic device and the first antenna are connected via the switch in the second state or the third state, monitoring a signal transmitted from the first satellite using the second satellite module included in the electronic device connected to the second antenna 690 included in the electronic device, while receiving location information about the electronic device from a second satellite using the GNSS module connected to the first antenna.

According to an embodiment, monitoring the signal transmitted from the first satellite, while receiving the location information about the electronic device may include, in the second state, monitoring reception of a ring alert signal transmitted from the first satellite using the second satellite module connected to the second antenna, while receiving the location information from the second satellite using the GNSS module connected to the first antenna. According to an embodiment, the second state may include a listen state of the first satellite module.

According to an embodiment, monitoring the signal transmitted from the first satellite, while receiving the location information about the electronic device may include, in the third state, monitoring a strength of the signal transmitted from the first satellite using the second satellite module connected to the second antenna, while receiving the location information from the second satellite using the GNSS module connected to the first antenna. According to an embodiment, the third state may include an idle state of the first satellite module.

According to an embodiment, the method may further include identifying whether a condition for updating a location of the electronic device is satisfied. According to an embodiment, the method may further include, when it is identified that the condition is satisfied, controlling the switch to connect the GNSS module and the first antenna to each other in the second state or the third state.

According to an embodiment, controlling the switch to connect the GNSS module and the first antenna to each other may include, when it is identified that the condition is satisfied, determining a first time period for receiving the location information out of a time period of the second state or the third state. According to an embodiment, controlling the switch to connect the GNSS module and the first antenna to each other may include controlling the switch to connect the GNSS module and the first antenna to each other during the first time period.

According to an embodiment, the method may further include receiving the location information from the second satellite via the first antenna during the first time period. According to an embodiment, the method may further include updating the location of the electronic device based on the location information.

According to an embodiment, the method may further include, after updating the location of the electronic device, transmitting a signal to the first satellite based on the updated location of the electronic device in the first state of the first satellite module. According to an embodiment, the first state may include a transmit state of the first satellite module.

According to an embodiment, the method may further include monitoring a signal transmitted from the first satellite via the second antenna in the first state, the second state, and the third state.

According to an embodiment, a non-transitory recording medium may store instructions that may perform, in a first state of a first satellite module included in an electronic device, related to an emergency service, transmitting and receiving a signal to and from a first satellite using the first satellite module connected to a first antenna included in the electronic device via a switch included in the electronic device, in a second state or a third state of the first satellite module related to the emergency service, different from the first state, monitoring a signal transmitted from the first satellite using the first satellite module connected to the first antenna via the switch, and when a GNSS module included in the electronic device and the first antenna are connected via the switch in the second state or the third state, monitoring a signal transmitted from the first satellite using the second satellite module included in the electronic device connected to the second antenna included in the electronic device, while receiving location information about the electronic device from a second satellite using the GNSS module connected to the first antenna.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 601) comprising:
a first antenna (680);
a second antenna (690);
a GNSS module (660);
a first satellite module (650);
a second satellite module (670) connected to the second antenna;
a switch (685) configured to connect any one of the first satellite module and the GNSS module to the first antenna;
at least one processor (120, 620, 640); and
memory storing instructions configured to, when executed by the at least one processor, cause the electronic device to:
in a first state of the first satellite module related to an emergency service, transmit and receive a signal to and from a first satellite (220) using the first satellite module connected to the first antenna via the switch, wherein a signal is received from the first satellite using the second satellite module connected to the second antenna,
in a second state or a third state of the first satellite module related to the emergency service, different from the first state, monitor a signal transmitted from the first satellite using the first satellite module connected to the first antenna via the switch, and
when the GNSS module and the first antenna are connected via the switch in the second state or the third state, monitor a signal transmitted from the first satellite using the second satellite module connected to the second antenna, while receiving location information about the electronic device from a second satellite (230) using the GNSS module connected to the first antenna.

2. The electronic device of claim 1, wherein the instructions are configured to, when executed by the at least one processor, cause the electronic device to, in the second state, monitor reception of a ring alert signal transmitted from the first satellite using the second satellite module connected to the second antenna, while receiving the location information from the second satellite using the GNSS module connected to the first antenna, and
wherein the second state includes a listen state of the first satellite module.

3. The electronic device of claim 1 or 2, wherein the instructions are configured to, when executed by the at least one processor, cause the electronic device to, in the third state, monitor a strength of the signal transmitted from the first satellite using the second satellite module connected to the second antenna, while receiving the location information from the second satellite using the GNSS module connected to the first antenna, and
wherein the third state includes an idle state of the first satellite module.

4. The electronic device of any one of claims 1 to 3, wherein the instructions are configured to, when executed by the at least one processor, cause the electronic device to:
identify whether a condition for updating a location of the electronic device is satisfied, and
when it is identified that the condition is satisfied, control the switch to connect the GNSS module and the first antenna to each other in the second state or the third state.

5. The electronic device of any one of claims 1 to 4, wherein the instructions are configured to, when executed by the at least one processor, cause the electronic device to:
when it is identified that the condition is satisfied, determine a first time period for receiving the location information out of a time period of the second state or the third state, and
control the switch to connect the GNSS module and the first antenna to each other during the first time period.

6. The electronic device of any one of claims 1 to 5, wherein the instructions are configured to, when executed by the at least one processor, cause the electronic device to:
receive the location information from the second satellite via the first antenna during the first time period, and
update the location of the electronic device based on the location information.

7. The electronic device of any one of claims 1 to 6, wherein the instructions are configured to, when executed by the at least one processor, cause the electronic device to, after updating the location of the electronic device, transmit a signal to the first satellite based on the updated location of the electronic device in the first state of the first satellite module, and
wherein the first state includes a transmit state of the first satellite module.

8. The electronic device of any one of claims 1 to 7, wherein the instructions are configured to, when executed by the at least one processor, cause the electronic device to, after updating the location of the electronic device, transmit a signal including information about the updated location of the electronic device to the first satellite in the first state of the first satellite module.

9. The electronic device of any one of claims 1 to 8, wherein the instructions are configured to, when executed by the at least one processor, cause the electronic device to:
in the second state or the third state, control the switch to connect the GNSS module and the first antenna to each other in every specified time period,
during the specified time period, receive the location information about the electronic device from the second satellite via the first antenna, and
update the location of the electronic device based on the location information.

10. The electronic device of any one of claims 1 to 9, wherein the instructions are configured to, when executed by the at least one processor, cause the electronic device to monitor a signal transmitted from the first satellite via the second antenna in the first state, the second state, and the third state.

11. The electronic device of any one of claims 1 to 10, wherein the first antenna is implemented as a main antenna, and the second antenna is implemented as a diversity antenna.

12. A method of operating an electronic device (101, 601), comprising:
in a first state of a first satellite module (650) included in the electronic device, related to an emergency service, transmitting and receiving a signal to and from a first satellite (220) using the first satellite module connected to a first antenna (680) included in the electronic device via a switch (685) included in the electronic device, wherein a signal is received from the first satellite using a second satellite module connected to a second antenna;
in a second state or a third state of the first satellite module related to the emergency service, different from the first state, monitoring a signal transmitted from the first satellite using the first satellite module connected to the first antenna via the switch; and
when a GNSS module (660) included in the electronic device and the first antenna are connected via the switch in the second state or the third state, monitoring a signal transmitted from the first satellite using the second satellite module (670) included in the electronic device connected to the second antenna (690) included in the electronic device, while receiving location information about the electronic device from a second satellite (230) using the GNSS module connected to the first antenna.

13. The method of claim 12, wherein monitoring the signal transmitted from the first satellite, while receiving the location information about the electronic device includes, in the second state, monitoring reception of a ring alert signal transmitted from the first satellite using the second satellite module connected to the second antenna, while receiving the location information from the second satellite using the GNSS module connected to the first antenna, and
wherein the second state includes a listen state of the first satellite module.

14. The method of claim 12 or 13, wherein monitoring the signal transmitted from the first satellite, while receiving the location information about the electronic device includes, in the third state, monitoring a strength of the signal transmitted from the first satellite using the second satellite module connected to the second antenna, while receiving the location information from the second satellite using the GNSS module connected to the first antenna, and
wherein the third state includes an idle state of the first satellite module.

15. The method of any one of claims 12 to 14, further comprising:
identifying whether a condition for updating a location of the electronic device is satisfied; and
when it is identified that the condition is satisfied, controlling the switch to connect the GNSS module and the first antenna to each other in the second state or the third state.
